# EUROPEAN PATENT APPLICATION

(11) **EP 0 968 813 A2**
(43) Date of publication of application: **05.01.2000**
(21) Application number: 99304827.1
(22) Date of filing: 21.06.1999
(51) Int. Cl.: B29D 30/56

(54) **Precured tread for tire retreading and method of producing the same**

(30) Priority: 30.06.1998 JP 18459298; 26.02.1999 JP 4986299
(71) Applicant: Bridgestone Corporation, Tokyo (JP)
(72) Inventor: Oyamada, Shoichi, Kodaira City, Tokyo (JP)
(74) Representative: Whalley, Kevin

(57) **Abstract**

A precured tread (11) for tire retreading is adhered to a platform tire (12) to produce a retreaded tire. In the precured tread, a fin portion (20) obliquely and outwardly extending substantially along a slant surface (16) of the precured tread (11) and thinning toward a top side thereof is formed on each of both widthwise end portions of an adhesion surface (14) of the precured tread to be adhered to the platform tire. By using such a precured tread, separation failure can effectively be controlled while maintaining good appearance in the retreaded tire product.

## Description

This invention relates to a precured tread for tire retreading adhered to a platform tire in the production of retreaded tires and a method of producing the same.

As the conventional precured tread for tire retreading, it is known to have a flat adhesion surface to be adhered to a platform tire and a trapezoidal shape at its section as disclosed, for example, in JP-A-9-70,903. This precured tread is stuck onto an adherend surface of the platform tire (an outer surface in the radial direction) at a state of interposing a cement for adhesion (uncured rubber) and then adhered to the platform tire by vulcanization.

In such a conventional precured tread, however, there are problems that both end portions of the precured tread in the widthwise direction subjected to deflection deformation along the adherend surface of the platform tire in the adhesion intends to return to its initial shape to thereby create a peeling force between the precured tread and the platform tire, and that in a retreaded tire product, as a shearing force is repeatedly applied between the precured tread and the platform tire by external force input from a road surface, separation failure is often caused between an end of the precured tread and the platform tire during the running over a long time. And also, the precured tread has a trapezoidal shape at its section, so that there is a problem that when the precured tread is adhered to the platform tire, a recess, step difference or the like is ereated in a boundary between the end of the precured tread and the platform tire, whereby an appearance of the retreaded tire product is degraded.

It is, therefore, an object of the invention to provide a precured tread for tire retreading capable of effectively controlling the separation failure while maintaining a good appearance of the retreaded tire product and a method of producing the same.

According to a first aspect of the invention, there is the provision of in a precured tread for tire retreading vulcanized prior to adhesion to a platform tire and having an approximately trapezoidal shape at its section, an improvement wherein a fin portion obliquely and outwardly extending substantially along a slant surface of the precured tread and thinning toward a top side thereof is formed on each of both widthwise end portions of an adhesion surface of the precured tread to be adhered to the platform tire.

As mentioned above, when the fin portion obliquely and outwardly extending substantially along the inclined surface and thinning toward the top side is formed on each of both widthwise end portions of the adhesion surface of the precured tread, the adhesion area between the precured tread and the platform tire increases, so that the peeling force and shearing force between the precured tread and the platform tire are decreased to effectively control the separation failure creating therebetween. In addition, since the fin portion becomes thin at the top side thereof, the outer surface of the precured tread or the fin portion is smoothly connected to the outer surface of the platform tire, the recess, step difference and the like are not caused in the boundary between the precured tread and the platform tire and hence the appearance at the boundary becomes good.

According to a second aspect of the invention, such a precured tread can easily be produced by a method comprising the steps of:
housing a tread material made of an uncured rubber in a cavity of a vulcanization mold having a molding surface convexly curved substantially at the same radius of curvature as in an adherend surface of a platform tire and inclining both side end portions of the molding surface at an angle larger than that in a center portion thereof while contacting an adhesion surface of the tread material adhered to the platform tire with the molding surface; and
vulcanizing the tread material to form a precured tread having an adhesion surface concavely curved substantially at the same curvature as in the adherend surface and provided on each of both widthwise end portions with a fin portion.

In a preferable embodiment of the invention, a top of the fin portion has a restriction ratio (U) of 3-8%. Thus, the separation failure can surely be controlled while suppressing the occurrence of wrinkles.

In another preferable embodiment of the invention, a thickness (T) in a base end of the fin portion is within a range of 30-65% of a length (L) of the fin portion. Thus, the occurrence of wrinkles can strongly be suppressed while reducing the cost.

In the other preferable embodiment of the invention, the length (L) of the fin portion is not less than 10 mm. Thus, the appearance of a retreaded tire product can be improved.

In a still further preferable embodiment of the invention, an inner face of the fin portion is a concave face having a radius of curvature (r) of 20-60 mm. In this case, the length and thickness of the fin portion can easily be rendered into the above adequate shape.

In a yet further preferable embodiment of the invention, an outer surface of the top portion in the fin portion is provided with a vertical portion extending substantially in the thickness direction of the precured tread and a split face of the vulcanization mold for vulcanizing the precured tread is coincided with a vertical face located at the base end side of the fin portion rather than the top thereof. Thus, it can be facilitated to take out the precured tread after the vulcanization from the mold and remove rubber protruding from the split face of the mold.

In another preferable embodiment of the invention, the adhesion surface is dented substantially at the same radius of curvature as in an adherend surface of the platform tire. Thus, when the precured tread is adhered to the platform tire, there is no need to conduct the deflection deformation of the precured tread along the adherend surface of the platform tire, so that the adhesion work becomes easy and the initial shape of the precured tread is substantially maintained even after the adhesion, and hence the peeling force is hardly created between the precured tread and the platform tire, whereby the separation failure between the pre-cured tread and the platform tire is surely controlled.

In the other preferable embodiment of the invention, the radius of curvature (R) in the adhesion surface of the precured tread is within a range of 85-115% of the radius of curvature (Q) in the adherend surface of the platform tire. In this case, the development of the above effect is further ensured.

In a yet further preferable embodiment of the invention, a peelable canvas layer is adhered to the adhesion surface prior to the vulcanization and vulcanized as it is. In this case, a clean and fresh adhesion surface having microscopic irregularities suitable for the adhesion can easily be developed only by peeling the canvas layer. Moreover, such a canvas layer can easily be adhered to the tread material in the production of the precured tread.

In a still further preferable embodiment of the invention, as the canvas layer is used a canvas, in which product of average end count per 5 cm of warps and wefts and finish thickness (mm) is within a range of 10-40. Thus, the peeling of the canvas layer from the precured tread is facilitated and also the yarn breaking-up of the canvas layer during peeling and the occurrence of the wrinkle can be prevented.

In another preferable embodiment of the invention, each side end portion of the canvas layer is folded outward at a top of the fin portion and a folded part is adhered to an outer surface of the fin portion. Thus, the separation failure between the fin portion and the platform tire can surely be controlled.

In the other preferable embodiment of the invention, the folded part of the canvas layer has a width (H) of 0.5-5.0 mm. In this case, the separation failure between the fin portion and the platform tire can be more controlled.

In a further preferable embodiment of the invention, the side end portion of the canvas layer is protruded out from a split face of the vulcanization mold and vulcanized at a state of clamping the protruded portion by the mold. Thus, an adequate tension can be applied to the canvas layer during the vulcanization.

The invention will be described with reference to the accompanying drawings, wherein:
Fig. 1 is a diagrammatically radial section view illustrating a precured tread and a platform tire in a first embodiment of the invention;
Fig. 2 is an enlargedly partial section view illustrating a neighborhood of a fin portion in the precured tread of Fig. 1;
Fig. 3 is a diagrammatically radial section view of an embodiment of the retreaded tire;
Fig. 4 is a diagrammatically section view illustrating a step for manufacturing a precured tread;
Fig. 5 is a diagrammatically section view of a precured tread provided with a canvas layer in a second embodiment of the invention;
Fig. 6 is a diagrammatically section view illustrating a step for manufacturing a precured tread shown in Fig. 5;
Fig. 7 is an enlarged partly section view of Fig. 6 in the vicinity of a fin portion;
Fig. 8 is an enlarged partly section view in a third embodiment of the invention likewise Fig. 7;
Fig. 9 is an enlarged partly section view in a fourth embodiment of the invention likewise Fig. 7;
Fig. 10 is an enlarged partly section view in a fifth embodiment of the invention likewise Fig. 7;
Fig. 11 is an enlarged partly section view in a third embodiment of the invention likewise Fig. 7; and
Fig. 12 is an enlarged partly section view of a precured tread used in a test.

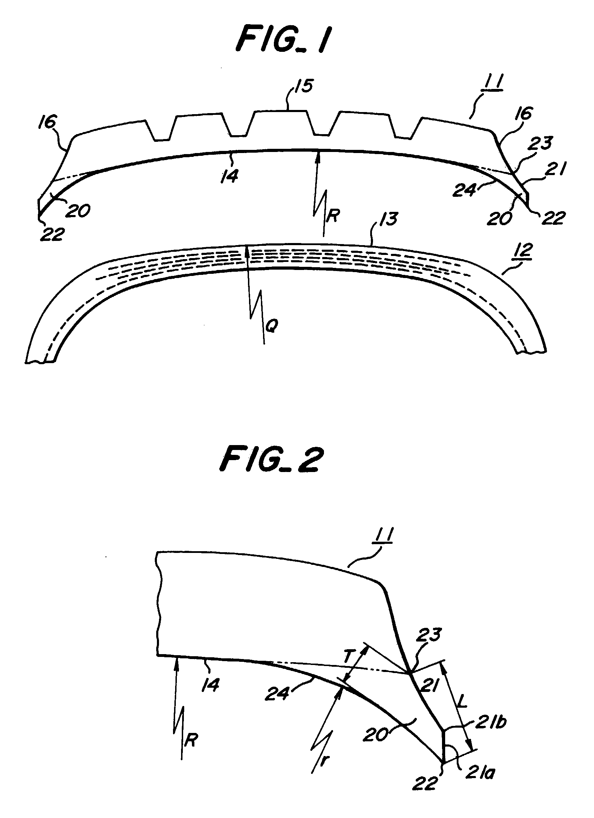

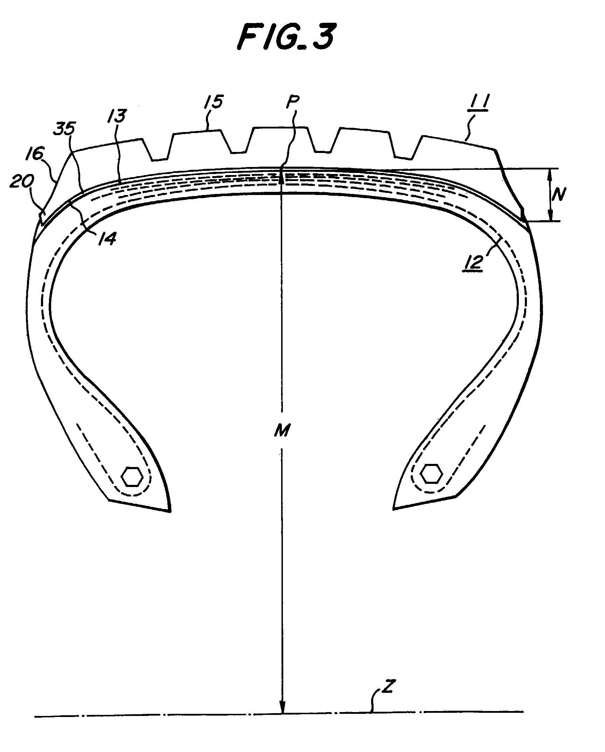

A first embodiment of the invention will be described with reference to Figs. 1-4.

In Fig. 1, numeral 11 is a band-shaped precured tread used in a retreaded tire, which is made of a vulcanized rubber. The precured tread 11 indicates substantially a trapezoidal shape at its radial section and comprises a width-wide adhesion surface (inner surface) 14 to be adhered to an adherend surface (outer surface in the radial direction) 13 of a platform tire 12, a width-narrow outer surface 15 constituting a tread surface in a tire product, and a pair of slant surfaces 16 connecting the adhesion surface 14 to the outer surface 15 and inclining inwardly in the widthwise direction from the adhesion surface 14 to the outer surface 15.

Furthermore, the adhesion surface 14 is dented toward the outer surface 15 at the approximately same radius of curvature as that in the adherend surface 13 of the platform tire 12, and the depth thereof is gradually deepened toward a center in the widthwise direction. As a result, when the precured tread 11 is adhered to the platform tire 12, there is no need to conduct deflection deformation along the adherend surface 13 of the platform 12, so that the adhesion work is facilitated. Moreover, as the precured tread 11 maintains substantially its initial shape even after the adhesion, the peeling force is hardly created between the precured tread 11 and the platform tire 12, whereby the separation failure between the precured tread 11 and the platform tire 12 is surely controlled.

In this case, it is preferable that the radius of curvature R in the adhesion surface 14 is within a range of 85-115% of the radius of curvature Q in the adherend surface 13 of the platform tire 12. Because, when the radius of curvature R is within the above range, if the adhesion surface 14 is contacted with the adherend surface 13, there is hardly created a gap therebetween, whereby the adhesion work can be facilitated and the control of the separation failure can be ensured.

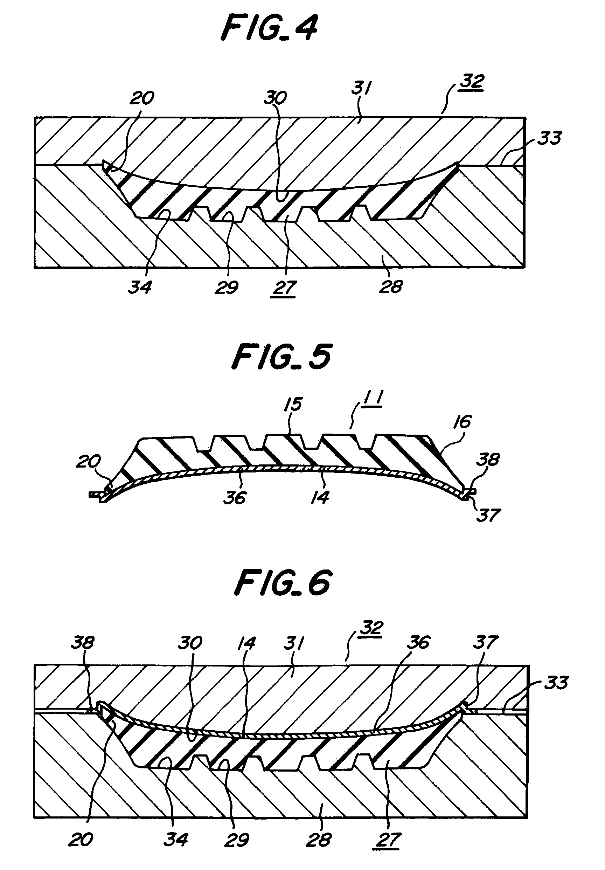

In Figs. 1 and 2, a fin portion 20 is formed at each of both end portions of the adhesion surface 14 in the widthwise direction, which extends obliquely outward from the adhesion surface 14 substantially along the slant surface 16 of the precured tread 11. And also, the fin portions 20 become thin at a top side thereof. In this connection, the fin portion 20 is gradually thinned up to a central region and relatively and suddenly thinned at the top side as shown in the illustrated embodiment, or the fin portion 20 may be thinned at a given ratio toward the top side, or the like.

When the fin portion 20 is formed in the precured tread 11 as mentioned above, the adhesion area between the platform tire 12 and the precured tread 11 is increased to decrease the peeling stress and shearing stress between the precured tread 11 and the platform tire 12, whereby the occurrence of the separation failure therebetween is effectively controlled. Furthermore, as the fin portion 20 becomes thinner at the top side, the outer surface 21 of the precured tread 11 and hence the fin portion 20 is smoothly connected to the outer surface of the platform tire 12, whereby a recess, step difference or the like is not caused at the boundary therebetween and the appearance becomes good.

In the precured tread 11 having the above fin portion 20, the length in the longitudinal direction at the widthwise center of the adhesion surface 14 is the same as the length in the longitudinal direction at the top 22 of the fin portion 20 in case of the band-shaped form prior to the adhesion, but when such a precured tread 11 is adhered to the platform tire 12, the peripheral length at the top 22 of the fin portion 20 is made smaller than the peripheral length at the widthwise center of the adhesion surface 14 under the influence of the convex adherend surface 13. That is, the fin portion 20 is pressed in the longitudinal direction (peripheral direction after the adhesion) during the adhesion. Therefore, when the precured tread 11 is adhered to the platform tire 12, there is a fear of creating wrinkles in the fin portion 20.

However, such a wrinkle can effectively be controlled by making a restriction ratio (U) in the top 22 of the fin portion 20 after the adhesion to not more than 8%. When the restriction ratio (U) is less than 3%, the fin portion 20 becomes small and the separation failure is apt to be caused from the top 22 of the fin portion 20. Therefore, the fin portion 20 is favorable to have a structure that the restriction ratio (U) in the top 22 thereof is within a range of 3-8%. The term "restriction ratio (U)" used herein means a percentage of a ratio N/M as shown in Fig. 3, wherein M is a distance in the radial direction from a center axis Z of the platform tire 12 to an intersect P between the adherend surface 13 of the platform tire 12 after the buffing and an equatorial plane of the tire and N is a distance in the radial direction from the intersect P to the top 22 of the fin portion 20 after the adhesion. Moreover, the restriction ratio (U) is favorable to be within a range of 4-6%. In the latter case, the occurrence of the wrinkle and the separation failure can be strongly controlled.

Furthermore, when the thickness T in a base end 23 of the fin portion 20 (position crossing an extended line of the adhesion surface 14 with the slant surface 16) is less than 30% of a length L of the fin portion 20, the whole of the fin portion 20 is thinned to fear the occurrence of the wrinkle, while when it exceeds 65%, the effect of preventing the wrinkle is saturated and only the thickness is increased to raise the cost. Therefore, the thickness T in the base end 23 is favorable to be within a range of 30-65% of the length L.

On the other hand, the thickness in the top 22 of the fin portion 20 is favorable to be within a range of 1-2 mm, because when it is less than 1 mm, the wrinkle is easily generated, while when it exceeds 2 mm, the step difference is easily generated. Furthermore, when the length L in the fin portion 20 is favorable to be not less than 10 mm because when the length L is not less than 10 mm, the recess, step difference or the like is controlled and the appearance becomes good. Moreover, the inner surface 24 of the fin portion 20 may be a flat surface, but in order to improve the adhesion property, the inner surface is favorable to be a concave surface dented toward the base end 23 as shown in the illustrated embodiment. And also, when the radius of curvature r in the inner surface 24 of the fin portion 20 is within a range of 20-60 mm, the length L of the fin portion 20 and the thickness T in the base end 23 can easily be put to the aforementioned adequate ranges, respectively. Moreover, a vertical face 21a extending substantially in a thickness direction of the precured tread 11 is formed on the outer surface 21 at the top of the fin portion 20.

In case of producing the above precured tread 11, a tread material 27 having an approximately trapezoidal shape at its section and made of an uncured rubber is extruded from an extruder (not shown) and cut into a given length, and thereafter the band-shaped cut tread material 27 is set in a mold recess 29 of a lower mold 28 so as to face the outer surface 15 downward as shown in Fig. 4. Then, an upper mold 31 having a molding surface 30 at its lower face is descended to contact with the lower mold 28. As a result, the tread material 27 is housed in a cavity 34 formed in a vulcanization mold 32 by closing the lower and the upper molds 28, 31 and at that time the molding surface 30 is contacted with an adhesion surface 14 of the tread material 27.

In this case, a split surface 33 in the closing of the mold 32 or the contact surface between the lower and the upper molds 28, 31 is contacted with the vertical surface 21a at the side of the base end 23 of the fin portion 20 apart from the top 22. On the other hand, if the split surface 33 is coincided with the top 22 of the fin portion 20, rubber protruded from the split surface 33 extends from the top 22 of the fin portion 20, so that if such a protruded rubber is removed roughly, there is caused the scattering in the length L of the fin portion 20 to degrade the appearance and consequently it is required to carefully conduct the above removing operation while taking a sufficient time. And also, if the split surface 33 is coincided with the outer surface 21 at the side of the base end 23 separated from the vertical surface 21a or a base end 21b of the vertical surface 21a, the upper mold 31 catches on the top part of the fin portion 20 during the rising of the upper mold 31 after the vulcanization, so that it is difficult to take out the precured tread 11 from the vulcanization mold 32. However, when the split surface 33 is coincided with the vertical surface 21a located at the side of the base end 23 instead of the top 22 of the fin portion 20 as mentioned above, it is easy to take out the precured tread 11 from the vulcanization mold 32 after the vulcanization and to remove rubber protruding from the split surface 33 of the vulcanization mold 32.

Thereafter, the above mold assembly is transferred into a vulcanization apparatus (not shown) and vulcanized to convert the tread material 27 into the precured tread 11. In this case, the molding surface 30 of the upper mold 31 is convexly curved at substantially the same radius of curvature as in the adherend surface 13 of the platform tire 12 and both side end portions thereof are inclines at an angle larger than that of a central portion, so that the adhesion surface 14 formed by the molding surface 30 is dented at substantially the same radius of curvature as in the adherend surface 13 and each of both widthwise end portions is provided with the fin portion 20.

Next, when a used tire is retreaded by using the thus obtained precured tread 11, a remaining tread rubber is removed from the used tire by buffing and thereafter a cushion rubber for adhesion made of an uncured rubber is placed onto a crown portion of the used tire to form a platform tire 12. Then, as shown in Fig. 3, the precured tread 11 is stuck onto the crown portion of the platform tire 12 to adhere the adhesion surface 14 and the fin portion 20 to the adherend surface 13 of the platform tire 12. Next, the platform tire 12 adhered with the precured tread 11 is transferred into the vulcanization apparatus (not shown) and vulcanized to form a retreaded tire.

A second embodiment of the invention will be described with reference to Figs. 5-7.

In this embodiment, the precured tread 11 is formed by adhering a peelable canvas layer 36 to an adhesion surface 14 of a tread material 27 prior to vulcanization and then vulcanizing them. In the case of adhering the canvas layer 36 to the adhesion surface 14 before the vulcanization, microscopic irregularities in the surface of the canvas layer 36 (texture of the canvas) are transcribed onto the adhesion surface 14 during the vulcanization, whereby the same microscopic irregularities as in the buffing are formed on the adhesion surface 14 and also a fresh surface is held by covering with the canvas layer 36.

Moreover, the surface roughness of the canvas layer 36 can be represented by a value (B) of product of average end count per 5 cm of warps and wefts and finish thickness (mm). As the canvas layer 36 to be adhered to the adhesion surface 14, it is preferable to use a canvas having the product value (B) within a range of 10-40. When the product value (B) is less than 10, the thickness of the canvas layer 36 becomes too thin or the end count of the yarns becomes too coarse, so that wrinkles are caused in the canvas layer 36 during the vulcanization or the yarn breaking-up of the canvas layer 36 is caused when the canvas layer 36 is peeled off from the precured tread 11. While, when the product value (B) is not less than 10, the canvas layer 36 has a proper strength, whereby the occurrence of wrinkle and yarn breaking-up is effectively prevented.

On the other hand, when the product value (B) exceeds 40, the canvas layer 36 becomes too expensive and also the rubber of the precured tread 11 finely and deeply encroaches into the canvas layer 36, so that it is difficult to peel off the canvas layer 36 from precured tread 11. When the product value (B) is not more than 40, the rubber constituting the precured tread 11 encroaches to the inside of the canvas layer 36 under proper roughness and deepness, so that the peeling can be facilitated as mentioned above. Moreover, when the product value (B) is within a range of 25-40, the peeling of the canvas layer 36 from the precured tread 11 can relatively easily be performed, but the canvas layer 36 becomes somewhat expensive. Therefore, the product value (B) is more favorable to be within a range of 10-25.

Furthermore, the canvas layer 36 is extended outwardly in the widthwise direction over the fin portion 20, and each side end portion of the canvas layer 36 located at the outside of the top 22 of the fin portion 20 is folded at the top 22 toward the base end 23, and a part of the folded portion 37 is adhered to the outer surface 21 of the fin portion 20 or the vertical surface 21a thereof before the vulcanization. As a result, the microscopic irregularities are transcribed onto the outer surface 21 of the top part of the fin portion 20 from the canvas layer 36 likewise the case of the adhesion surface 14 and a fresh surface is held by covering with the canvas layer 36.

The width H of the canvas layer 36 adhered to the outer surface 21 of the fin portion 20 is favorable to be within a range of 0.5-5.0 mm. When the precured tread 11 is adhered to the platform tire 12,the top part of the fin portion 20 somewhat sinks in the cushion rubber 35 for adhesion as shown in Fig. 3. In this case, if the microscopic irregularities are formed on the outer surface 21 of the top part of the fin portion 20 through the canvas layer 36, the adhesion between the cushion rubber 35 and the outer surface 21 is ensured, but if the outer surface 21 is a smooth surface at a state of contacting with the surface of the vulcanization mold 32, the adhesion to the cushion rubber 35 becomes weak.

For this end, when the width H is less than 0.5 mm, the area surely adhering the outer surface 21 to the cushion rubber 35 becomes too narrow and the separation failure may be caused therebetween. On the other hand, when the width H exceeds 5.0 mm, the microscopic irregularities (texture of the canvas) are widely developed on a portion of the outer surface 21 not covered with the cushion rubber 35 or a surface of a shoulder portion in a tire product and hence the appearance is degraded.

Particularly, the width H is more preferable to be within a range of 1.0-3.0 mm. Because, when the width H is not less than 0.5 mm but less than 1.0 mm, if the sinking quantity is large, a part of the cushion rubber 35 easily peels off from the outer surface 21 to apparently indicate the separation failure, while when the width H is more than 3.0 mm but not more than 5.0 mm, the microscopic irregularities (texture of the canvas) are developed on a surface not covered with the cushion rubber 35 to the extent that does not mind.

Furthermore, a side end portion (folded portion 37) of the canvas layer 36 not adhered to the outer surface 21 forms a protrusion portion 38 protruded sideways from the fin portion 20. When the tread material 27 is housed in the vulcanization mold 32, the protrusion portion 38 is protruded into the split surface 33 and sandwiched between the upper and lower molds 28, 31 to conduct the vulcanization. In this case, it is favorable that the width J of the protrusion portion 38 sandwiched between the lower and upper molds 28, 31 is within in a range of about 30-60 mm. When the width J is within the above range, a proper tension can be applied to the canvas layer 36 during a vulcanization and also the oozing of rubber to the split surface 33 can effectively be prevented.

And also, the production of the precured tread 11 adhered with the canvas layer 36 is substantially the same as in the first embodiment, but differs in their points of previously adhering the canvas layer 36 to the adhesion surface 14 of the tread material 27, vulcanizing the canvas layer 36 together with the tread material 27, and protruding the protrusion portion 38 into the split surface 33 during the vulcanization. Moreover, the adhesion of the canvas layer 36 to the tread material 27 may be carried out before the transfer of the tread material 27 into the mold recess 29, or after the transfer and before the closing of the mold.

In addition, the tire retreading using the precured tread 11 adhered with the canvas layer 36 is substantially the same as in the first embodiment, but differs in a point that the canvas layer 36 is peeled off from the precured tread 11 to expose the adhesion surface 14 and the surface of the fin portion 20 covered with the canvas layer 36 prior to the adhesion of the precured tread 11 to the platform tire 12. Moreover, the peeling work becomes easy when the canvas layer 36 is peeled off by gasping the protrusion portion 38.

When the canvas layer 36 is removed as mentioned above, a clean and fresh surface having the microscopic irregularities transcribed from the canvas layer 36 appears on the adhesion surface 14 and the surface of the fin portion 20, so that the precured tread 11 can surely be adhered by vulcanization to the platform tire 12 without buffing. Moreover, a fresh surface is developed on the outer surface 21 of the fin portion 20 by peeling the canvas layer 36 as mentioned above, so that even if the top part of the fin portion 20 somewhat sinks in the cushion rubber 35 during the vulcanization, such a fresh surface is contacted with the cushion rubber 35, whereby the fin portion 20 is surely adhered by vulcanization to the cushion rubber 35 without buffing and the separation failure from such a part is effectively prevented.

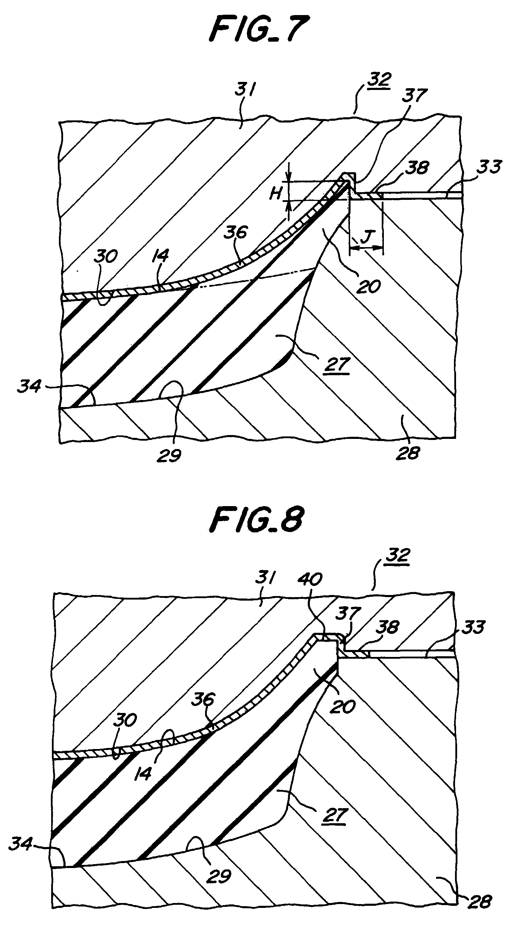

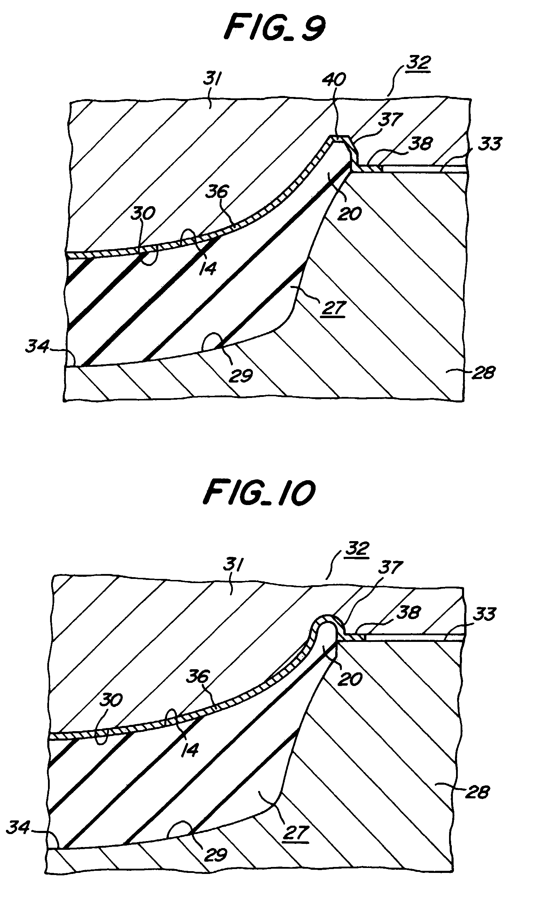

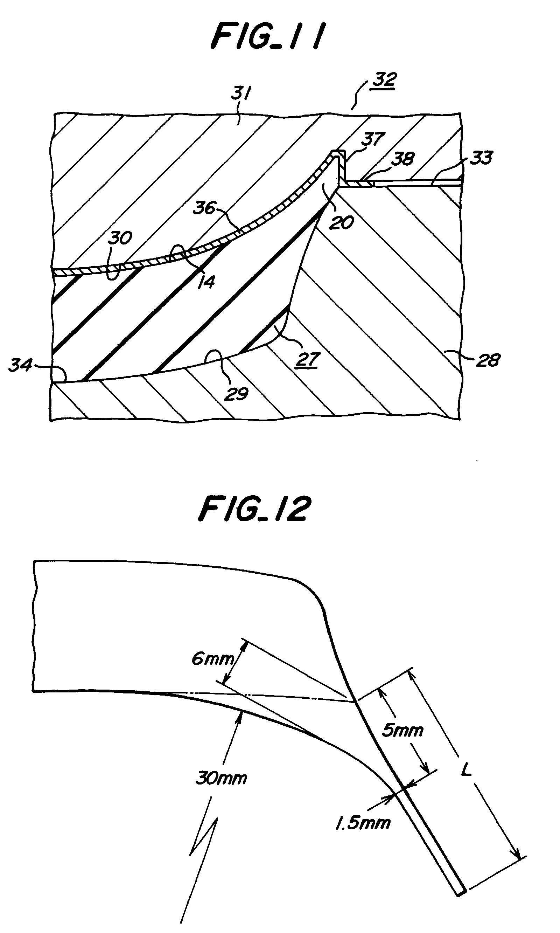

Fig. 8 shows a third embodiment of the invention, wherein a top face 40 of the fin portion 20 is made wider by decreasing the thinning ratio toward the top thereof. And also, Fig. 9 shows a fourth embodiment of the invention, wherein a width-wide top face 40 is formed likewise the third embodiment and also a top of the vertical surface 21a is slightly inclined inwardly in the widthwise direction toward the top thereof. Fig. 10 shows a fifth embodiment of the invention, wherein the top part of the fin portion 20 is rendered into a half circle in section. Fig. 11 shows a sixth embodiment of the invention, wherein the split surface 33 in the mold 32 is coincided with the base end 21b of the vertical surface 21a.

The following examples are given in illustration of the invention and are not intended as limitations thereof.

### Test Example 1

In this test, there are provided the conventional precured tread having no fin portion (hereinafter referred to as a conventional tread) and precured treads 1-8 having a length L of the fin portion as shown in Table 1 (hereinafter referred to as test treads 1-8). Moreover, a radius of curvature R in an adhesion surface of each tread is 700 mm and a distance from the widthwise center of the tread to the base end of the fin portion is 118 mm. In the fin portions of the test treads 2-8, as shown in Fig. 12, a radius r of curvature of the inner surface is 30 mm and the thickness T in the base end is 6 mm, while the thickness is gradually thinned toward the top so as to render a thickness located at a position separated from the base end by 5 mm into 1.5 mm and the thickness from this position to the top is constant, that is, 1.5 mm. As to the fin portion of the tested tread 1, an acute edge is formed in the top and the thickness T in the base end is 3.0 mm.

Then, each of these treads is adhered to an adherend surface of a platform tire having a tire size of 11R22.5 (distance M is 510 mm). In this case, a restriction ratio (U) in each tread is also shown in Table 1. Thereafter, the occurrence of wrinkle in the fin portion of each tread and the appearance in a shoulder portion are observed to obtain results as shown in Table 1. In the precured treads having the restriction ratio (U) of not more than 8%, the occurrence of wrinkles is effectively controlled. In the precured treads having the length L of the fin portion of not less than 10 mm, the appearance is improved.

Next, each of the resulting retreaded tires subjected to an internal pressure of 7.0 kgf/cm² is run on a drum at a speed of 65 km/h under a load of 2770 kg over a distance of 3055 km and thereafter the presence or absence of the separation failure is observed between the precured tread and the platform tire. The results are shown in Table 1. In the precured treads having the restriction ratio (U) of not less than 3%, the occurrence of the separation failure is effectively controlled. Moreover, when the same test as mentioned above is carried out by using a precured tread in which the radius of curvature in the adhesion surface is infinite (flat surface prior to the adhesion), the result is the same as mentioned above.

**Table 1**

| | Conventional tread | Test tread | | | | | | | |
|---|---|---|---|---|---|---|---|---|---|
| | | 1 | 2 | 3 | 4 | 5 | 6 | 7 | 8 |
| Length (L) | - | 3 | 5 | 10 | 15 | 20 | 25 | 30 | 35 |
| Restriction ratio (U) | - | 2 | 3 | 4 | 5 | 6 | 7 | 8 | 9 |
| Wrinkle | - | absence | absence | absence | absence | absence | a few | a few | many |
| Appearance | bad | relatively good | relatively good | good | good | good | good | good | good |
| Separation failure | large | a little | slight | absence | absence | absence | absence | absence | absence |

### Test Example 2

In this test, there are provided the above test treads 3-7 and test treads 9-18 wherein the thickness T at the base end of the fin portion is 6, 3 or 9 mm and the length L of the fin portion is 10, 15, 20, 25 or 30 mm as shown in Table 2. Moreover, the value of T/L in Table 2 is expressed as a percentage. The shape of each tread is substantially the same as in Test Example 1, while the radius of curvature r in the inner surface of the fin portion in all of the test treads 9-18 is 30 mm.

Next, each of the above treads is adhered to the same adherend surface of the platform tire as in Test Example 1, during which the occurrence of the wrinkle in the fin portion is observed to obtain results as shown in Table 2. Even when the thickness T in the base end of the fin portion differs as mentioned above, if the thickness T is not less than 30% of the length L of the fin portion, the occurrence of the wrinkle can strongly be controlled.

**Table 2**

| | Test tread | | | | | | | |
|---|---|---|---|---|---|---|---|---|
| | 3 | 4 | 5 | 6 | 7 | 9 | 10 | 11 |
| Thickness (T) | 6 | 6 | 6 | 6 | 6 | 3 | 3 | 3 |
| Length (L) | 10 | 15 | 20 | 25 | 30 | 10 | 15 | 20 |
| T/L | 60 | 40 | 30 | 24 | 20 | 30 | 20 | 15 |
| Wrinkle | absence | absence | absence | a few | a few | absence | a few | a few |

| | Test tread | | | | | | | |
|---|---|---|---|---|---|---|---|---|
| | 12 | 13 | 14 | 15 | 16 | 17 | 18 | |
| Thickness (T) | 3 | 3 | 9 | 9 | 9 | 9 | 9 | |
| Length (L) | 25 | 30 | 10 | 15 | 20 | 25 | 30 | |
| T/L | 12 | 10 | 90 | 60 | 45 | 36 | 30 | |
| Wrinkle | a few | a few | absence | absence | absence | absence | absence | |

### Test Example 3

In this test, there are provided test treads 19-26 each provided on its adhesion surface with a canvas layer having product value (B) of 55, 41, 40, 25, 20, 10, 9 or 5. Then, the occurrence of wrinkles in the canvas layer of each precured tread is visually observed to obtain results as shown in Table 3.

Next, a peeling force required for peeling the canvas layer from each tread is measured to obtain results as shown in Table 3. The peeling force in Table 3 is represented by an index on the basis that the test tread 19 is 100, wherein the smaller the index value, the easier the peeling. After each of the test tread is adhered to the platform tire and vulcanized to form a retreaded tire, a force required for peeling the tread from the retreaded tire (peeling resistance) is measured to obtain results as shown in Table 3. The peeling resistance in Table 3 is represented by an index on the basis that the test tread 19 is 100. And also, the weight of the canvas layer in each tread per unit area is represented by an index on the basis that the test tread 19 is 100 in Table 3 because the weight of the canvas layer is usually thought as a substitute indication of the cost. In case of using the canvas layer having the product value (B) of 10-40, the occurrence of wrinkle can effectively be prevented and the peeling of the canvas layer can easily conducted.

**Table 3**

| | Value of product (B) | Presence of wrinkle | Peeling force | Peeling resistance | Weight |
|---|---|---|---|---|---|
| Test tread 19 | 55 | absence | 100 | 100 | 100 |
| Test tread 20 | 41 | absence | 64 | 100 | 80 |
| Test tread 21 | 40 | absence | 62 | 100 | 74 |
| Test tread 22 | 25 | absence | 56 | 98 | 44 |
| Test tread 23 | 20 | absence | 54 | 98 | 29 |
| Test tread 24 | 10 | absence | 50 | 96 | 24 |
| Test tread 25 | 9 | presence | 50 | 95 | 18 |
| Test tread 26 | 5 | presence | 45 | 90 | 10 |

As mentioned above, according to the invention, the separation failure can effectively be controlled while maintaining good appearance in the retreaded tire product.

## Claims

1. A precured tread (11) for tire retreading vulcanized prior to adhesion to a platform tire (12) and having an approximately trapezoidal shape at its section, characterized in that a fin portion (20) obliquely and outwardly extending substantially along a slant surface (16) of the precured tread (11) and thinning toward a top side thereof is formed on each of both widthwise end portions of an adhesion surface (14) of the precured tread to be adhered to the platform tire.

2. A precured tread as claimed in claim 1, characterized in that a top (22) of the fin portion (20) has a restriction ratio (U) of 3-8%.

3. A precured tread as claimed in claim 1 or 2, characterized in that a thickness (T) in a base end (23) of the fin portion (20) is within a range of 30-65% of a length (L) of the fin portion.

4. A precured tread as claimed in any of claims 1 to 3, characterized in that the length (L) of the fin portion (20) is not less than 10 mm.

5. A precured tread as claimed in any of claims 1 to 4, characterized in that an inner face (24) of the fin portion (20) is a concave face having a radius of curvature (r) of 20-60 mm.

6. A precured tread as claimed in any of claims 1 to 5, characterized in that an outer surface (21) of the top portion in the fin portion (20) is provided with a vertical face (21a) extending substantially in the thickness direction of the precured tread and a split face (33) of a vulcanization mold (32) for vulcanizing the precured tread coincides with a vertical face located at the base end side of the fin portion rather than the top thereof.

7. A precured tire as claimed in any of claims 1 to 6, characterized in that the adhesion surface (14) is dented substantially at the same radius of curvature as an adherend surface (13) of the platform tire.

8. A precured tread as claimed in claim 7, characterized in that the radius of curvature (R) of the adhesion surface (14) of the precured tread is within a range of 85-115% of the radius of curvature (Q) of the adherend surface (13) of the platform tire.

9. A precured tread as claimed in any of claims 1 to 8, characterized in that a peelable canvas layer (36) is adhered to the adhesion surface (14) prior to the vulcanization and vulcanized as it is.

10. A precured tread as claimed in claim 9, characterized in that the canvas layer (36) comprises a canvas in which the product of an average end count per 5 cm of warps and wefts and a finish thickness (mm) is within a range of 10-40.

11. A precured tread as claimed in claim 9 or 10, characterized in that each side end portion of the canvas layer (36) is folded outward at a top (22) of the fin portion (20) and a folded part (37) is adhered to an outer surface (21) of the fin portion.

12. A precured tread as claimed in claim 11, characterized in that the folded part (37) of the canvas layer (36) has a width (H) of 0.5-5.0 mm.

13. A method of producing a precured tread (11) for tire retreading, which comprises the steps of:
housing a tread material (27) made of an uncured rubber in a cavity (34) of a vulcanization mold (32) having a molding surface (30) convexly curved substantially at the same radius of curvature as an adherend surface (13) of a platform tire (12) and inclining both side end portions of the molding surface at an angle larger than that in a center portion thereof while contacting an adhesion surface of the tread material adhered to the platform tire with the molding surface; and
vulcanizing the tread material (27) to form a precured tread (11) having an adhesion surface (14) concavely curved substantially at the same curvature as the adherend surface (13) and provided on each of both widthwise end portions with a fin portion (20).

14. A method as claimed in claim 13, characterized in that a peelable canvas layer (36) is adhered to the adhesion surface (14) prior to the vulcanization and vulcanized as it is.

15. A method as claimed in claim 14, characterized in that the side end portion of the canvas layer (36) is protruded out from a split face (33) of the vulcanization mold (32) and vulcanized at a state of clamping the protruded portion by the mold (32).
